# EUROPEAN PATENT APPLICATION

(11) **EP 3 298 892 A1**
(43) Date of publication of application: **28.03.2018**
(21) Application number: 16190039.4
(22) Date of filing: 22.09.2016
(51) Int. Cl.: A01M 23/30

(54) **SNAP TRAP ENCLOSURE ADAPTED FOR REDUCING NON-TARGET BYCATCHES**

(71) Applicant: Camro ApS, 9610 Norager (DK)
(72) Inventor: Sørensen, Kurt, 9610 Nørager (DK)
(74) Representative: Larsen & Birkeholm A/S

(57) **Abstract**

The present invention relates to a snap trap enclosure (100) for placement on the ground, and for reducing non-target bycatches. The snap trap enclosure (100) comprises a housing (200) with a rat and/or mouse entry opening (210) positioned in the side wall (220); and a trap (300) positioned within the housing (200). The trap (300) comprises both a mouse snap trap (310) and a rat snap trap (320). The housing (200) further comprises a tunnel (230) extending from the rat and/or mouse entry opening (210) and towards a chamber (250). The trigger plate (322) of the rat snap trap (320) is positioned within the opening (252) to the chamber (250), and wherein the trigger plate (312) of the mouse snap trap (310) is positioned within the chamber (250) such that a mouse or rat must pass the trigger plate (322) of the rat snap trap (320) before reaching the trigger plate (312) of the mouse snap trap (310).

## Description

### Technical field of the invention

The present invention relates to the field of traps for rats and mice, and in particular relates to traps in a safe box for use on the ground.

### Background of the invention

Inherent flaws in the basic design of snap-traps to date create problems with non-target bycatch issues, when birds, lizards, snakes, kittens, etc. are caught in traps set for pests, inciting negative public reaction. Other types of traps, such as live capture cage traps and leg-hold traps, have the disadvantage of being much bulkier and/or of heavy construction. They merely restrain rather than kill the animals, and unless checked regularly at short time intervals will cause captured animals unnecessary stress and suffering. As concern for animal rights grows worldwide, and international animal welfare regulations become more stringent, particularly in relation to perceived indiscriminate use of toxins and inefficient traps, the number and type of traps available is diminishing.

### Object of the Invention

The objective of the present invention is to provide a snap trap enclosure adapted for reducing non-target bycatches.

### Description of the Invention

A first aspect of the present invention relates to a snap trap enclosure for placement on the ground, the snap trap enclosure comprising:
- a housing with a rat and/or mouse entry opening positioned in the side wall; and
- a trap positioned within the housing; wherein the trap comprises both a mouse snap trap and a rat snap trap; wherein the housing further comprises a tunnel extending from the rat and/or mouse entry opening and towards a chamber; wherein the trigger plate of the rat snap trap is positioned within the opening to the chamber, and wherein the trigger plate of the mouse snap trap is positioned within the chamber such that a mouse or rat must pass the trigger plate of the rat snap trap before reaching the trigger plate of the mouse snap trap.

A second aspect of the present invention relates to a snap trap enclosure for placement on the ground, the snap trap enclosure comprising:
- a housing with a rat and/or mouse entry opening positioned in the side wall; and
- a trap positioned within the housing; wherein the trap comprises both a mouse snap trap and a rat snap trap; wherein the housing further comprises a tunnel extending from the rat and/or mouse entry opening and towards a chamber; wherein the trigger plate of the rat snap trap is positioned within the opening to the chamber, and wherein the trigger plate of the mouse snap trap is positioned within the chamber to the left or the right from the opening to the chamber or behind the rat snap trap.

The housing may be made from any material, such as metal or plastic.

In the present context, the term "tunnel" is to be understood very broadly, including corridors, channels, and similar tunnel-like structures.

In one or more embodiments, at least a part of the trigger plate of the rat snap trap is extending into the tunnel. This configuration makes it easier for the rat or mouse to be attracted to enter the chamber.

In one or more embodiments, the rat and/or mouse snap trap is positioned within the chamber, or at least partly positioned within the chamber.

In one or more embodiments a) the rat snap trap is configured to snap, when the mouse snap trap is triggered, and/or b) the mouse snap trap is configured to snap, when the rat snap trap is triggered. This configuration secures that no non-target animals subsequently entering the snap trap enclosure will be caught.

In one or more embodiments, the rat snap trap is configured to snap, when the mouse snap trap is triggered.

In one or more embodiments, the mouse snap trap is configured to snap, when the rat snap trap is triggered.

In one or more embodiments, the housing comprises two rat and/or mouse entry openings leading into opposite ends of the tunnel leading to the chamber. Since rats and mice tend to crawl along the outer wall of a building, it is important that they can enter a snap trap enclosure positioned against a wall of a building from both sides.

In one or more embodiments, a plate of a material suitable for a rat and/or mouse to gnaw through is blocking the tunnel such that a rat and/or mouse cannot reach the chamber without gnawing through said plate. Such a material may comprise or consist of a polymer material, a starch material, a lignin material, such as cardboard, a protein material, or the like. Preferably, the material is un-dissolvable by snails.

Non-target by catches, such as birds, lizards, snakes, snails, kittens, or the like, are not prone to pass the plate by destroying it. Rather, they will quickly give up, and leave the housing through the rat and/or mouse entry opening.

In one or more embodiments, the tunnel is configured with an open bottom, such that a rat and/or mouse within the tunnel is walking on the ground on which the snap trap enclosure is positioned. This configuration makes the rat and/or mouse feel more safe, and thereby more prone to stay within the tunnel.

In one or more embodiments, the plate is positioned within the tunnel at a distance from the rat and/or mouse entry opening such that a rat and/or mouse can enter the tunnel without having to gnaw through the plate. Such a distance may be at least 7 cm inside the tunnel, such as at least 8 cm inside the tunnel, such as at least 9 cm inside the tunnel, such as at least 10 cm inside the tunnel, such as at least 11 cm inside the tunnel, such as at least 12 cm inside the tunnel, such as at least 13 cm inside the tunnel, such as at least 14 cm inside the tunnel, such as at least 15 cm inside the tunnel, such as at least 20 cm inside the tunnel.

In one or more embodiments, the plate is perforated with holes and/or slits/slots. The holes and/or slits/slots have two purposes. The scent from the bait in the snap trap and/or scent attractant positioned within the tunnel must reach the outside of the snap trap enclosure to lure the mouse and/or rat. Furthermore, the mouse and/or rat must be able to position its incisors in a hole and/or slit to be able to gnaw through the plate.

In one or more embodiments, the holes have a diameter of 3-8 mm, preferably about 5 mm, such as within the range of 4-7 mm, e.g. 5-6 mm.

In one or more embodiments, the slits/slots have a width of 3-8 mm, preferably about 5 mm, such as within the range of 4-7 mm, e.g. 5-6 mm.

In one or more embodiments, a scent attractant is positioned in the tunnel in a position between the plate and the snap trap.

In one or more embodiments, a scent attractant is positioned in the tunnel in a position between the plate and the snap trap; wherein the scent attractant is sized and configured such that a rat and/or mouse can pass it in the tunnel and move unhindered towards the snap trap.

In one or more embodiments, the housing further comprises a barbed slit being sized and configured for receiving the plate. This configuration makes it impossible for a rat and/or mouse to move the plate, e.g. to move it upwards, and pass underneath.

In one or more embodiments, the plate is made of a water-resistant cardboard material.

In one or more embodiments, the thickness of the plate is within the range of 1-3 mm.

In one or more embodiments, the housing comprises two rat and/or mouse entry openings leading into opposite ends of the tunnel leading to the snap trap, and wherein a plate is blocking the tunnel on each side of the snap trap, such that a rat and/or mouse cannot reach the chamber without gnawing through said plate.

The dimensions of the rat and/or mouse entry opening are important. A rat is not prone to enter a narrow entry opening below 40 mm.

In one or more embodiments, the rat and/or mouse entry opening is sized and configured to leave an opening with a free height of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the rat and/or mouse entry opening is sized and configured to leave an opening with a clear width of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the snap trap enclosure comprises means for securing the housing to the ground and/or to a wall near the ground, to avoid that the snap trap enclosure can be turned on its side. Such means may be bolts or earth anchors.

In one or more embodiments, a part of the side wall is configured as a door/lid with a lock for restricted access to the snap trap located within the housing.

Advantageously a signal indicating the activation of the snap trap is transmitted wirelessly to a receiving device. Hereby wired electrical connections between the snap trap enclosure and a communication device, placed at a distance from the snap trap enclosure, may be avoided. The communication device eventually has a radio module enabling the device to send SMS messages to a computer.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a perspective view of a snap trap enclosure in accordance with various embodiments of the invention;
Figure 2 is a perspective view of a snap trap enclosure in accordance with various embodiments of the invention, and where the top lid and side walls have been removed; and
Figure 3 is a top view of a snap trap enclosure in accordance with various embodiments of the invention, and where the top lid has been removed.

### References

- 100: Snap trap enclosure
- 200: Housing
- 210: Rat and/or mouse entry opening
- 220: Side wall
- 230: Tunnel
- 240: Barbed slit
- 250: Chamber
- 252: Opening
- 300: Trap
- 310: Mouse snap trap
- 320: Rat snap trap
- 400: Plate
- 410: Hole
- 500: Scent attractant
- 600: Transmitter

### Detailed Description of the Invention

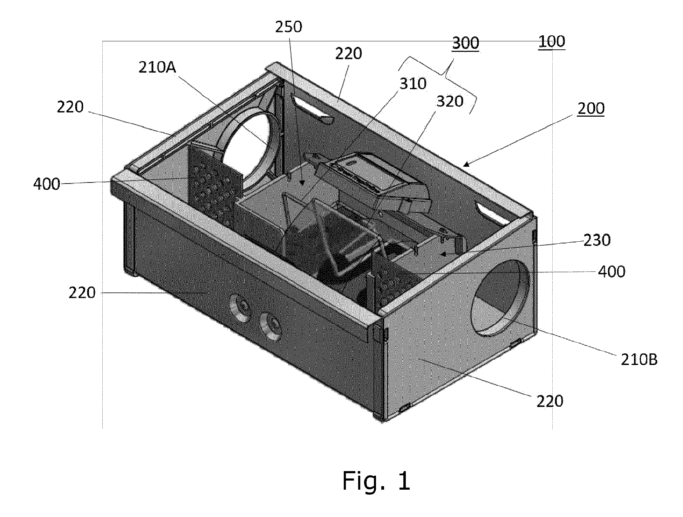

Figure 1 is a perspective view of a snap trap enclosure 100 in accordance with various embodiments of the invention, and where the top lid has been removed. The snap trap enclosure 100 comprises a housing 200 with a rat and/or mouse entry opening 210 positioned in the side wall 220; and a trap 300 positioned within the housing 200. The trap 300 comprises both a mouse snap trap 310 and a rat snap trap 320. The housing 200 further comprises a tunnel 230 extending from the rat and/or mouse entry opening 210 and towards a chamber 250. The trigger plate 322 of the rat snap trap 320 is positioned within the opening 252 to the chamber 250, and wherein the trigger plate 312 of the mouse snap trap 310 is positioned within the chamber 250 such that a mouse or rat must pass the trigger plate 322 of the rat snap trap 320 before reaching the trigger plate 312 of the mouse snap trap 310.

The housing comprises two rat and/or mouse entry openings 210A 210B leading into opposite ends of the tunnel 230 leading to the chamber 250.

A plate 400 is blocking the tunnel 230 on each side of the snap trap 300, such that a rat and/or mouse cannot reach the chamber 250 without gnawing through said plate 400. The plate 400 is positioned within the tunnel at a distance from the rat and/or mouse entry opening 210A, 210B such that a rat and/or mouse can enter the tunnel without having to gnaw through the plate 400.

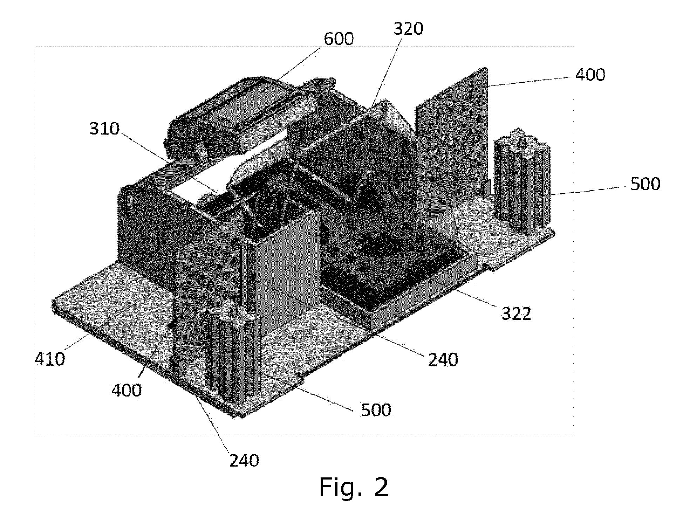

Figure 2 is a perspective view of a snap trap enclosure 100 in accordance with various embodiments of the invention, and where the top lid and side walls have been removed. A part of the trigger plate 322 of the rat snap trap 320 is extending into the tunnel 230.
The plate 400 is shown with perforated with holes 410, and a scent attractant 500 is positioned in the tunnel 230 in a position between the plate 400 and the chamber 250. The scent attractant 500 is sized and configured such that a rat and/or mouse can pass it in the tunnel 230 and move unhindered towards the chamber 250, wherein a bait is positioned in the rat and mouse snap traps.

The housing 200 further comprises a barbed slit 240 being sized and configured for receiving the plate 400.

A transmitter 600 is also shown. The transmitter is configured for transmitting a signal indicating the activation of the snap trap wirelessly to a receiving device.

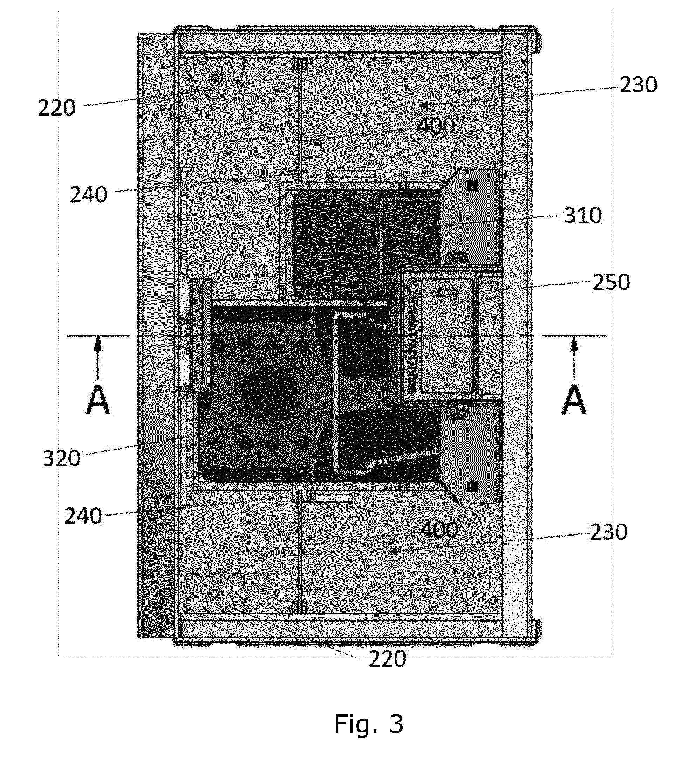

Figure 3 is a top view of a snap trap enclosure in accordance with various embodiments of the invention, and where the top lid has been removed.

## Claims

1. A snap trap enclosure (100) for placement on the ground, the snap trap enclosure (100) comprising:
- a housing (200) with a rat and/or mouse entry opening (210) positioned in the side wall (220); and
- a trap (300) positioned within the housing (200); **characterized in that** the trap (300) comprises both a mouse snap trap (310) and a rat snap trap (320); wherein the housing (200) further comprises a tunnel (230) extending from the rat and/or mouse entry opening (210) and towards a chamber (250); wherein the trigger plate (322) of the rat snap trap (320) is positioned within the opening (252) to the chamber (250), and wherein the trigger plate (312) of the mouse snap trap (310) is positioned within the chamber (250) such that a mouse or rat must pass the trigger plate (322) of the rat snap trap (320) before reaching the trigger plate (312) of the mouse snap trap (310).

2. A snap trap enclosure (100) according to claim 1, **characterized in that** the at least a part of the trigger plate (322) of the rat snap trap (320) is extending into the tunnel (230).

3. A snap trap enclosure (100) according to any one of the claims 1-2, **characterized in that** a) the rat snap trap (320) is configured to snap, when the mouse snap trap (310) is triggered, and/or b) the mouse snap trap (310) is configured to snap, when the rat snap trap (320) is triggered.

4. A snap trap enclosure (100) according to any one of the claims 1-3, **characterized in that** the housing comprises two rat and/or mouse entry openings (210A 210B) leading into opposite ends of the tunnel (230) leading to the chamber (250).

5. A snap trap enclosure (100) according to any one of the claims 1-4, **characterized in that** a plate (400) of a material suitable for a rat and/or mouse to gnaw through is blocking the tunnel (230) such that a rat and/or mouse cannot reach the chamber (250) without gnawing through said plate (400).

6. A snap trap enclosure (100) according to claim 5, **characterized in that** the plate (400) is positioned within the tunnel at a distance from the rat and/or mouse entry opening (210) such that a rat and/or mouse can enter the tunnel without having to gnaw through the plate (400).

7. A snap trap enclosure (100) according to any one of the claims 5-6, **characterized in that** the plate (400) is perforated with holes (410) and/or slots.

8. A snap trap enclosure (100) according to claim 3, **characterized in that** the holes (410) have a diameter of 3-8 mm, preferably about 5 mm.

9. A snap trap enclosure (100) according to any one of the claims 1-8, **characterized in that** a scent attractant (500) is positioned in the tunnel (230) in a position between the plate (400) and the snap trap (300); wherein the scent attractant (500) is sized and configured such that a rat and/or mouse can pass it in the tunnel and move unhindered towards the chamber (250).

10. A snap trap enclosure (100) according to any one of the claims 5-9, **characterized in that** the housing (200) further comprises a barbed slit (240) being sized and configured for receiving the plate (400).
